# DEMANDE DE BREVET EUROPEEN

(11) **EP 1 672 205 A1**
(43) Date de publication de la demande: **21.06.2006**
(21) Numéro de dépôt: 05301046.8
(22) Date de dépôt: 13.12.2005
(51) Int. Cl.: F02D 41/02, F02D 41/06, F02M 31/13

(54) **Procédé et dispositif de mise en condition d'un moteur de véhicule automobile en vue d'une régénération de filtre à particules**

(30) Priorité: 17.12.2004 FR 0413481
(71) Demandeur: Renault s.a.s., 92100 Boulogne Billancourt (FR)
(72) Inventeur: DANEAU, Marc, 92100, BOULOGNE BILLANCOURT (FR); PILLOT, Adrien, 91290, ARPAJON (FR)

(57) **Abrégé**

L'invention concerne un procédé de régénération de filtre à particules de véhicule diesel comprenant le fait de réchauffer le moteur par application d'une charge additionnelle (700) sur un alternateur électrique (800) du moteur, caractérisé en ce que l'on déclenche le réchauffement du moteur en réponse au fait qu'il se trouve dans une plage de températures basses (To) correspondant à un risque mécanique pour le moteur en cas de déclenchement de la régénération dans cette plage de températures (To).

## Description

L'invention concerne la régénération d'un filtre à particules de moteur Diesel de véhicule automobile.

Les filtres à particules s'encrassent et ne peuvent être nettoyés qu'à partir d'une température suffisamment élevée. Cette température étant supérieure à la température normale de fonctionnement au niveau de l'échappement, on a proposé divers aménagements permettant d'augmenter la température dans le filtre à particules et permettre ainsi d'éliminer les suies contenues dans le filtre, par combustion.

On a ainsi proposé de provoquer un réchauffement du filtre par sollicitation de l'alternateur dans la phase de régénération.

On a également proposé l'injection de gasoil en post-injection.

C'est-à-dire que l'on injecte du gasoil longtemps après le point mort haut (PMH) du cycle. Ce gasoil ne brûlera pas dans la chambre de combustion, mais dans la partie catalytique de la ligne d'échappement, élevant ainsi la température des gaz d'échappement qui traversent le filtre à particules jusqu'à la température de combustion des suies qu'il contient.

On a également proposé l'injection retardée, consistant à injecter du gasoil après le point mort haut lors de la phase de détente, ce qui a également pour effet d'augmenter la température des gaz à l'échappement.

Toutefois, ces dernières techniques se sont heurtées au problème résultant d'une augmentation non souhaitable de la quantité de gasoil dans l'huile de lubrification du moteur par rapport à un fonctionnement avec une injection normale. En effet, avec ces techniques, le gasoil touche les parois du cylindre, favorisant le mélange de l'huile recouvrant le cylindre. L'augmentation du taux de gasoil dans l'huile, appelée "dilution", peut entraîner la destruction du moteur.

Le problème de la dilution est d'autant plus important quand le moteur est froid, car le risque d'endommagement du moteur est encore plus élevé.

De manière générale, la régénération provoque une sollicitation du moteur qui lui est potentiellement dommageable lorsque le moteur est froid.

C'est pourquoi on veille actuellement à ne démarrer une phase de régénération du filtre à particules qu'à partir d'une température prédéterminée du moteur.

Cette démarche a toutefois un inconvénient du fait que certains types d'utilisation du véhicule peuvent n'offrir que de faibles plages de temps à moteur chaud.

C'est notamment le cas d'une utilisation du véhicule sur de petits trajets et à basse vitesse.

L'invention vise à alléger cette contrainte, c'est-à-dire à offrir de plus amples plages de temps pendant lesquelles le véhicule est en condition de température pour la mise en oeuvre d'une phase de régénération.

L'invention vise également à pouvoir être mise en oeuvre sans surcoût important vis-à-vis des techniques actuelles.

On propose pour cela selon l'invention un procédé de régénération de filtre à particules de véhicule diesel comprenant le fait de réchauffer le moteur par application d'une charge additionnelle sur un alternateur électrique du moteur.

Selon un aspect particulier, on déclenche le réchauffement du moteur en réponse au fait qu'il se trouve dans une plage de températures basses correspondant à un risque mécanique pour le moteur en cas de déclenchement de la régénération dans cette plage de températures.

Avantageusement, la plage de température basse présente une limite supérieure située entre 50 et 80° C.

Selon un aspect préféré, la plage de température présente une limite supérieure aux environs de 60° C.

A titre de variante préférentielle, l'étape consiste à arrêter ledit réchauffement du moteur par application d'une charge additionnelle sur l'alternateur à l'atteinte d'une température seuil du moteur To.

Selon une disposition particulière, la charge additionnelle appliquée à l'alternateur est un réchauffeur d'air placé sur la ligne d'admission du moteur.

Avantageusement, le réchauffeur d'air est apte à consommer une intensité sensiblement égale à 90 ampères.

Selon un aspect préféré, le procédé comporte de moyens de détermination d'une sollicitation électrique additionnelle CₒₙₛA à appliquer sur l'alternateur, en fonction du régime du moteur Rm et de sa température Te.

A titre de variante préférentielle, le procédé comporte des moyens aptes à identifier un état d'encrassement du filtre à particules, et à déclencher le réchauffement ainsi qu'une phase de régénération consécutive au réchauffement en cas d'encrassement du filtre à particules.

On propose également un moteur diesel de véhicule automobile comprenant un filtre à particules et des moyens de régénération d'un tel filtre, un alternateur électrique et au moins une charge alimentée par ce dernier, ainsi que des moyens de réchauffement du moteur aptes à commander l'application d'une charge sur l'alternateur.

Selon un aspect particulier, les moyens de commande du réchauffement du moteur sont prévus pour déclencher le réchauffement en réponse au fait que le moteur se trouve dans une plage de températures basses To correspondant à un risque mécanique pour le moteur en cas de déclenchement de la régénération dans cette plage de température To.

D'autres caractéristiques, buts et avantages de l'invention apparaîtront à la lecture de la description détaillée qui va suivre d'un mode de réalisation privilégié de l'invention, faite en référence aux figures annexées sur lesquelles :
- la figure 1 illustre la disposition des principaux organes associés à un moteur Diesel et une ligne d'échappement, conformément à une variante de l'invention ;
- la figure 2 est un schéma fonctionnel illustrant un processus de déclenchement et d'arrêt de réchauffement conforme à cette variante de l'invention ;
- la figure 3 représente fonctionnellement un système de commande de réchauffement conforme à cette variante de l'invention.

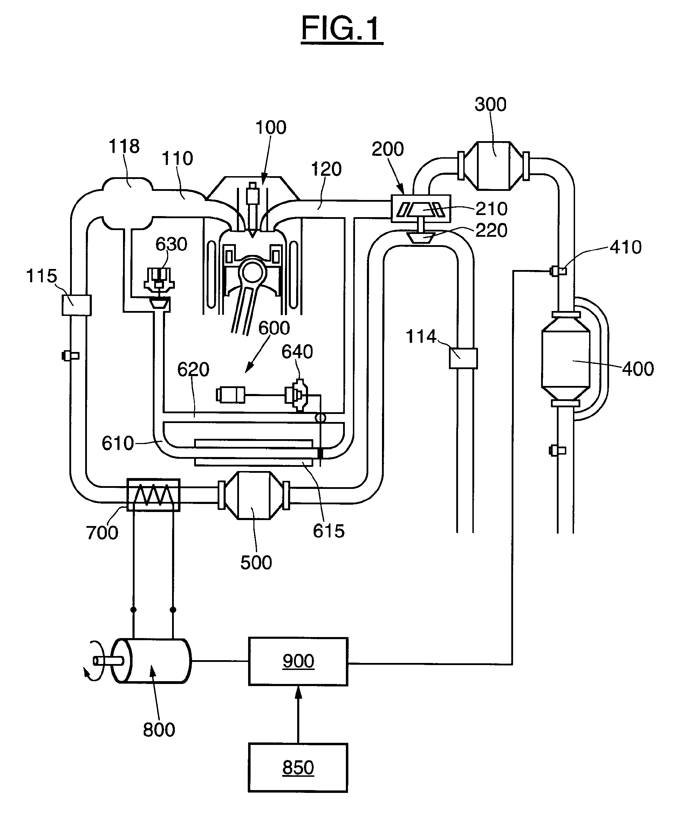

L'ensemble des organes illustrés à la figure 1 se répartit autour d'un cylindre 100 d'un moteur Diesel de véhicule automobile. On y distingue une conduite d'admission d'air 110 et une conduite d'échappement 120.

La conduite d'échappement 120 est équipée d'une turbine 210 entraînée par les gaz d'échappement. Cette turbine 210 fait partie d'un turbocompresseur 200 comprenant également, monté sur le même arbre que la turbine 210, un compresseur 220 sous la forme d'un arbre à ailettes au sein de la conduite d'admission 110. Ce turbocompresseur 200 compresse l'air admis dans la conduite 110 en vue de la suralimentation du moteur.

La conduite d'échappement 120 comporte, en aval du compresseur 220, un dispositif catalyseur 300 et un filtre à particules 400 sur lequel est représenté un capteur de température 410, dont les valeurs de prélèvement seront exploitées conformément à l'approche décrite ci-après.

La conduite d'admission 110 comporte, entre le compresseur 220 et le cylindre 100, un refroidisseur d'air de suralimentation (RAS) 500, de type connu en soi. Elle est en outre équipée d'un débitmètre 114.

On trouve également, au sein de l'ensemble représenté, un ensemble 600 reliant la conduite d'échappement 120 à la conduite d'admission 110 pour prélever une partie des gaz d'échappement et les recycler dans l'air d'admission.

Cet ensemble 600 est connu en soi sous la dénomination EGR (Exhaust Gaz Recycle).

Cet ensemble 600 est équipé d'un système de refroidissement des gaz d'échappement 615 (refroidisseur EGR) situé sur une conduite associée 610 en jonction entre les conduites d'admission 110 et d'échappement 120. La conduite refroidie 610 et la conduite directe 620 sont toutes deux équipées d'une vanne 640 d'entrée qui répartit les gaz d'échappement recyclés dans ces deux conduites.

L'ensemble 600 de recyclage des gaz d'échappement est également muni d'une vanne de sortie adaptée 630.

L'ensemble illustré comporte également un réchauffeur électrique 700 sur la conduite d'admission 110, ici spécifiquement en aval direct du refroidisseur d'air de suralimentation 500. Le réchauffeur électrique 700 se présente ici sous la forme d'une résistance chauffante. Il est alimenté en courant électrique par un alternateur 800 entraîné par le moteur.

Dans le schéma ci-dessus, le réchauffeur électrique 700 se trouve en amont d'un volet d'admission 115 qui peut être commandé, et qui est situé directement en amont d'une chambre 118 de mélange entre l'air d'admission et les gaz d'échappement recyclés tels que sortant de l'ensemble de recyclage 600. Le réchauffeur électrique 700 peut être installé à n'importe quel autre endroit, préférentiellement entre le refroidisseur d'air de suralimentation 500 et la chambre de mélange 118.

On va ici commander l'alimentation du réchauffeur 700 en sortie du refroidisseur d'air de suralimentation 500 pour charger au maximum l'alternateur électrique du moteur, qui à son tour va constituer une charge de nature mécanique sur le moteur.

Le moteur devant produire plus d'effort mécanique, va de ce fait produire plus de chaleur. Comme le moteur est plus chargé, son point de fonctionnement va se déplacer vers des zones de fonctionnement d'une courbe dilution/charge où la dilution est plus faible.

On adopte de plus un moyen de commande d'alimentation du réchauffeur électrique sous la forme d'un calculateur 850 qui asservit la puissance consommée par le réchauffeur électrique 700 sur une valeur de consigne de charge CₒₙₛA appliquée sur l'alternateur 800.

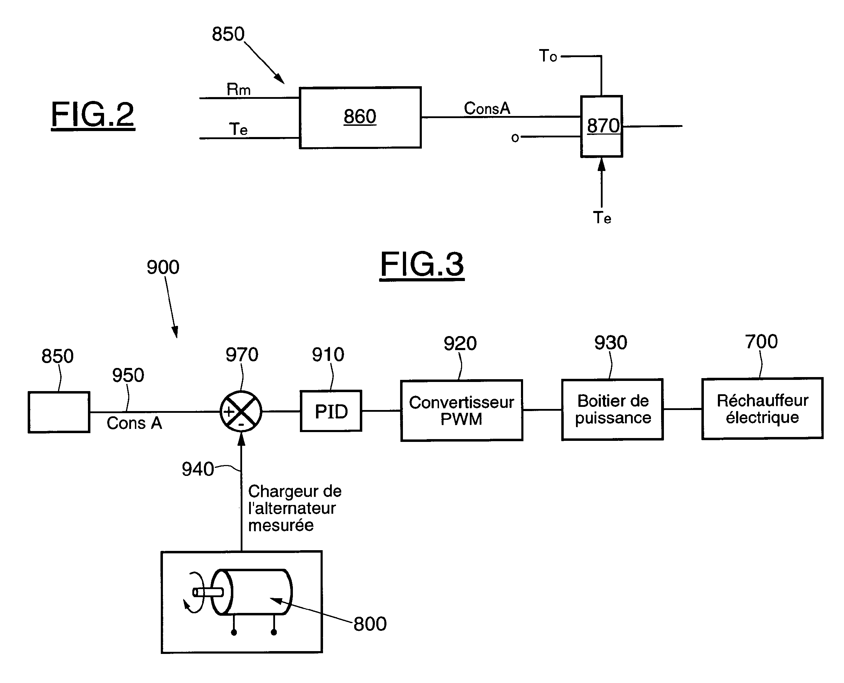

La figure 2 illustre fonctionnellement le processus d'établissement de la valeur de la consigne de charge CₒₙₛA de l'alternateur 800 par le calculateur 850. Le calculateur 850 prend d'abord en compte le régime moteur Rm et la température d'eau Te du moteur en tant que variables d'entrée.

Le calculateur 850 contient en mémoire une cartographie 860 déterminant la charge CₒₙₛAₘₐₓ qui correspond à la sollicitation maximale que peut admettre l'alternateur. Cette charge maximale CₒₙₛA dépend des conditions de fonctionnement du moteur, à savoir des deux variables d'entrées précédemment citées, que sont la température d'eau du moteur Te et le régime du moteur Rm.

La consigne de charge CₒₙₛA est d'autant plus grande que la température d'eau en présence est faible. Elle est aussi d'autant plus grande que le régime moteur Rm est élevé.

On estime qu'une valeur de CₒₙₛA voisine de 90A constitue une charge suffisante pour provoquer une montée en température adéquate du moteur. Le réchauffeur électrique est donc avantageusement dimensionné pour pouvoir consommer cette valeur de charge.

Le calculateur 850 dispose en outre en mémoire d'une valeur de température préétablie To.

Cette valeur To est comparée en permanence à la valeur de température d'eau Te. Ce travail de comparaison est référencé 870 sur la figure 3.

Selon que Te est inférieure à To ou non, le calculateur 850 respectivement déclenche ou annule la phase de réchauffement du moteur.

En pratique, si la température d'eau en présence Te est inférieure au seuil de température To, le calculateur 850 utilise alors la valeur de consigne de charge CₒₙₛA, telle que définie précédemment à l'aide de la cartographie. On décrira ci-après le processus d'asservissement mis en oeuvre alors.

Si au contraire la température Te est supérieure au seuil de température To, le calculateur 850 délivre une valeur nulle en tant que consigne d'asservissement.

L'alternateur n'est alors sollicité par le calculateur 850 que dans sa fonction d'éventuelle alimentation des équipements sollicités par le conducteur.

Cette comparaison de la température d'eau Te à une température-seuil To est également mise en oeuvre pour l'arrêt de la phase de réchauffement. Là encore, le calculateur 850 compare Te à la même valeur To.

En effet, la température seuil To définit non seulement la plage de témpératures basses dans laquelle il est nécessaire de mettre en oeuvre le réchauffement, mais aussi la fin de la phase de réchauffement.

Pour cela, dès la température To atteinte au cours du réchauffement, la sollicitation additionnelle de l'alternateur est désactivée par le fait que le calculateur délivre alors une valeur nulle au lieu de la consigne de charge maximale CₒₙₛAₘₐₓ.

On estime donc qu'au-delà de cette valeur seuil To, le moteur est à température adéquate pour passer en phase de régénération du filtre à particules.

En particulier le moteur ne présente, à partir de cette température To, pratiquement aucun risque d'endommagement dû au phénomène de dilution à température basse.

La température seuil To est ici fixée à 60°C, valeur à partir de laquelle le moteur n'est plus soumis à aucun risque d'endommagement en cas de mise en oeuvre de la régénération.

To est ici défini à 60°C pour un moteur diesel de type courant, mais To peut avoir d'autres valeurs. Il est typiquement compris entre 50°C et 80°C pour la protection d'un moteur diesel de véhicule automobile habituel.

Les températures basses, c'est-à-dire les températures inférieures à To, sont notamment rencontrées au démarrage du véhicule, c'est-à-dire lorsque le véhicule est « à froid ».

Mais elles sont également en présence pour des usages brefs et répétés du véhicule, ou sur des trajets à faible vitesse ou avec de longues périodes de ralenti.

L'invention permet donc de quitter rapidement une telle plage de températures basses et notamment de mettre en oeuvre une phase de régénération très peu de temps après le démarrage. Le véhicule est donc plus fréquemment disponible pour une régénération, et ce pendant des plages de temps plus longues puisque l'éventuel passage en dessous de To déclenche le réchauffement.

En veillant ainsi à ménager de larges plages de disponibilité vis-à-vis de la régénération, le véhicule s'en trouve protégé contre le risque d'une saturation du filtre à particules qui serait due à une utilisation permanente à froid.

La phase de régénération est mise en oeuvre ici dès l'atteinte de la température To, c'est-à-dire dès la fin de la phase de réchauffement. Le calculateur 850 déclenche pour cela ici la mise en oeuvre d'une post-injection dès l'atteinte de la température To.

Dans cette variante, la phase de réchauffement et la phase de régénération subséquente ne sont toutefois mises en oeuvre que si une régénération du filtre est nécessaire en termes d'encrassement.

Le calculateur 850 réalise une telle surveillance de l'état du filtre en cours d'utilisation du véhicule.

A cet effet le dispositif présente des moyens d'évaluation de la quantité de suie présente dans le filtre, à savoir notamment le capteur de pression 410 en entrée du filtre 400, éventuellement doublé d'un capteur de pression en sortie du filtre. La ou les valeurs délivrées par ces capteurs sont analysées par le calculateur 850 qui détermine à tout moment si une régénération est nécessaire.

Lorsque la régénération est nécessaire, le calculateur 850 déclenche l'éventuelle phase de réchauffage nécessaire puis la phase de régénération consécutive.

En cas d'un usage par courtes périodes du véhicule, le calculateur 850 procède à un enregistrement de l'état du filtre 400 à chaque arrêt du véhicule. Le calculateur tient compte de l'état du filtre à particules dès la mise en service suivante du véhicule par la lecture de l'état du filtre ainsi mémorisé précédemment.

Le calculateur 850 peut ainsi déclencher la phase de réchauffage et la régénération associée dès le démarrage suivant, sans avoir à re-déterminer à froid l'état du filtre à particules.

On va maintenant décrire un système d'asservissement qui permet de solliciter l'alternateur 800 selon la charge électrique CₒₙₛA.

Cet asservissement permet de tenir compte des perturbations éventuelles en présence. Par exemple, lorsque l'utilisateur allume les phares du véhicule, l'asservissement permet de réduire automatiquement la puissance du réchauffeur électrique 600 afin de ne pas dépasser la charge maximale admissible pour l'alternateur 800 et donc d'éviter de faire chuter la tension de bord de véhicule, qui pourrait provoquer l'extinction des phares par exemple.

Dans l'exemple illustré sur la figure 2, le système de commande par asservissement consiste en une disposition en série de quatre organes principaux, parmi lesquels on trouve d'abord un régulateur 910, ici sous la forme d'un module PID (Proportionnel Intégral Dérivé), suivi par un convertisseur délivrant un signal à modulation de largeur d'impulsion (PWM) 920, suivi à son tour par un boîtier de puissance 930 alimentant directement le réchauffeur électrique 700. Ce système d'asservissement 900 présente deux entrées de commande, à savoir respectivement une entrée 940 réceptionnant une valeur de charge de l'alternateur 800 telle que mesurée en temps réel sur ce dernier, et une entrée 950 recevant la valeur de consigne de charge CₒₙₛA à appliquer à l'alternateur 800.

L'entrée 940 est soustraite à l'entrée 950 recevant la consigne de charge CₒₙₛA, grâce à un soustracteur 970.

Lors de la phase de démarrage, le calculateur 850 du moteur délivre le niveau de consigne CₒₙₛA. Ce niveau de consigne est envoyé au boîtier de puissance 930 du réchauffeur électrique 700 sous forme PWM par l'intermédiaire du convertisseur 920. La résistance 700 réchauffe alors l'air d'admission comme le feraient les bougies de préchauffage.

La variable d'action de cet asservissement est ici le signal issu du convertisseur 920, envoyé au boîtier de puissance 930. Lorsque la charge mesurée sur l'alternateur 800 est plus faible que la charge de consigne CₒₙₛA, le régulateur 610 augmente le signal PWM pour augmenter la puissance électrique et donc la charge mécanique de l'alternateur 800 sur le moteur. On peut en variante adapter un signal du type RCO (Rapport Cyclique d'Ouverture).

Un contrôle de l'asservissement par le calculateur UCE 850 gérant le fonctionnement du moteur permet aisément d'augmenter la charge mécanique du moteur dans le cadre de la régulation thermique souhaitée pour le moteur.

Il existe ici une deuxième fonction au réchauffeur électrique 700. On exploite sa capacité à réchauffer l'air en amont des cylindres 100 lors des démarrages à froid. Cette fonction est actuellement assurée par des bougies de préchauffage disposées dans les chambres de combustion des cylindres. Le réchauffeur d'air 700 sur le conduit d'admission 110 remplace avantageusement les bougies.

Ainsi, l'utilisation du réchauffeur d'air électrique 700 à l'admission sur le moteur équipé du filtre à particules 400 permet d'économiser le coût élevé des bougies de préchauffage. Il s'avère en outre plus fiable.

De plus, le fait de disposer un réchauffeur électrique 700 sur le circuit d'admission 110 permet de chauffer plus vite le moteur et son circuit de refroidissement d'eau immédiatement après le démarrage avant de commencer une régénération. Le réchauffement se fait en effet non seulement par l'augmentation de la charge du moteur mais également par le réchauffage de l'air d'admission.

## Revendications

1. Procédé de régénération de filtre à particules de véhicule diesel comprenant le fait de réchauffer le moteur par application d'une charge additionnelle (700) sur un alternateur électrique (800) du moteur, **caractérisé en ce que** l'on déclenche le réchauffement du moteur en réponse au fait qu'il se trouve dans une plage de températures présentant une limite supérieure située entre 50 et 80° C et correspondant à un risque mécanique pour le moteur en cas de déclenchement de la régénération dans cette plage de températures (To).

2. Procédé selon la revendication précédente, **caractérisé en ce que** la plage de température présente une limite supérieure aux environs de 60° C.

3. Procédé selon l'une quelconque des revendications précédentes, **caractérisé en ce qu'**il comprend l'étape consistant à arrêter ledit réchauffement du moteur par application d'une charge additionnelle (700) sur l'alternateur (800) à l'atteinte d'une température seuil du moteur (To).

4. Procédé selon l'une quelconque des revendications précédentes, **caractérisé en ce que** la charge additionnelle (700) appliquée à l'alternateur (800) est un réchauffeur d'air (700) placé sur la ligne d'admission (110) du moteur.

5. Procédé selon la revendication précédente, **caractérisé en ce que** le réchauffeur d'air (700) est apte à consommer une intensité sensiblement égale à 90 ampères.

6. Procédé selon l'une quelconque des revendications précédentes, **caractérisé en ce qu'**il comporte de moyens de détermination d'une sollicitation électrique additionnelle (CₒₙₛA) à appliquer sur l'alternateur (800), en fonction du régime du moteur (Rm) et de sa température (Te).

7. Procédé selon l'une quelconque des revendications précédentes, **caractérisé en ce qu'**il comporte des moyens (850) aptes à identifier un état d'encrassement du filtre à particules (400), et à déclencher le réchauffement ainsi qu'une phase de régénération consécutive au réchauffement en cas d'encrassement du filtre à particules (400).

8. Procédé selon la revendication précédente, **caractérisé en ce qu'**il comporte des moyens de mémorisation (850) dudit état d'encrassement du filtre à particules, et des moyens aptes à lire ledit état d'encrassement tel que mémorisé lors d'un démarrage ultérieur du véhicule puis déclencher un réchauffement et une phase de régénération consécutive en réponse à la lecture dudit état d'encrassement.

9. Moteur diesel de véhicule automobile comprenant un filtre à particules et des moyens de régénération d'un tel filtre, un alternateur électrique (800) et au moins une charge (700) alimentée par ce dernier, ainsi que des moyens de réchauffement du moteur aptes à commander l'application d'une charge sur l'alternateur (800), **caractérisé en ce que** les moyens de commande (850) du réchauffement du moteur (850) sont prévus pour déclencher le réchauffement en réponse au fait que le moteur se trouve dans une plage de températures présentant une limite supérieure située entre 50 et 80° C et correspondant à un risque mécanique pour le moteur en cas de déclenchement de la régénération dans cette plage de température (To).
